# FASCICULE DE BREVET EUROPEEN

(11) **EP 3 899 361 B1**
(45) Date de publication et mention de la délivrance du brevet: **05.03.2025**
(21) Numéro de dépôt: 19832640.7
(22) Date de dépôt: 18.12.2019
(51) Int. Cl.: F21S 43/237, F21S 43/241, F21S 43/27, B60R 19/52, F21V 8/00, B60Q 1/26

(54) **ELÉMENT LUMINEUX DE PIÈCE DE CARROSSERIE EN POLYCARBONATE INJECTÉ**
LICHTELEMENT FÜR KAROSSERIEBAUTEIL AUS SPRITZGEGOSSENEM POLYCARBONAT
LIGHT ELEMENT FOR BODYWORK COMPONENT MADE OF INJECTION-MOLDED POLYCARBONATE

(30) Priorité: 19.12.2018 FR 1873441
(43) Date de publication de la demande: 27.10.2021
(73) Titulaire: OPmobility SE, 69007 Lyon (FR)
(72) Inventeur: STABLO, Frédéric, 01150 Sainte-Julie (FR)
(74) Mandataire: LLR
(86) Numéro de dépôt international: PCT/EP2019/085978
(87) Numéro de publication internationale: WO 2020/127502

(56) Documents cités:
- EP-A1- 3 190 006
- WO-A1-2017/059431
- WO-A1-2018/073678
- WO-A2-03/066374
- CN-U- 202 764 900
- DE-U1- 202012 008 792
- JP-A- 2013 037 963
- US-A1- 2015 138 807

## Description

La présente invention concerne le domaine des pièces de carrosserie de véhicule automobile. L'invention traite plus précisément de pièces de carrosserie comprenant un élément lumineux visible depuis l'extérieur du véhicule, par exemple formant une signature lumineuse.

On entend par élément lumineux un dispositif apte à diffuser de la lumière vers l'extérieur du véhicule. De tels éléments lumineux peuvent constituer des pièces esthétiques, disposées par exemple en face avant, ou sur les portières d'un véhicule afin de réaliser une signature lumineuse.

Il est connu de réaliser des pièces de carrosserie comprenant un élément lumineux, par exemple pour former une signature lumineuse. Dans de tels cas de figures, la source lumineuse est protégée par une portion de la pièce réalisée en matière plastique transparente. La source lumineuse peut par exemple être placée dans un renfoncement ménagé dans la face externe de la pièce de carrosserie et derrière la portion transparente ou encore prise en sandwich entre deux parties de la portion transparente. La portion transparente peut alors être montée sur une pièce de carrosserie, par exemple opaque. On obtient ainsi une pièce de carrosserie opaque comprenant une portion transparente apte à laisser passer la lumière émise par la source lumineuse protégée par la portion transparente.

Cependant, des pièces de carrosserie telle que décrites ci-dessus présentent certains inconvénients.

En effet, la portion transparente est réalisée dans un matériau relativement rigide. Dès lors, cette dernière peut se révéler être cassante, ce qui conduit à limiter ses dimensions afin de diminuer les risques de cassure. Il est donc difficile d'obtenir une portion transparente ayant des dimensions particulières, par exemple d'une longueur importante et d'une largeur réduite. Cette difficulté à manipuler une portion transparente ayant des dimensions comme celles mentionnées ci-dessus peut tout particulièrement poser un problème dans le cadre de la réalisation d'une signature lumineuse, généralement longue et fine. Le procédé de fabrication peut se révéler peu rentable et celui de montage plus complexe (fabrication d'une portion de la pièce de manière isolée, portion rapportée sur le corps principal de ladite pièce).

Pour pallier ce problème on connait des éléments lumineux réaliser en matière souple (FR 1854470). Toutefois, avec ce type d'éléments, il est difficile d'obtenir un éclairage uniforme lorsque la longueur est importante.

De plus, ce type de dispositif présente de nombreux inconvénients. En effet, un élément transparent ou translucide permet d'obtenir un bon éclairage mais la source de lumière est alors visible lorsque celle-ci est éteinte, ce qui n'est pas toujours souhaitable d'un point de vue esthétique. Par ailleurs, un élément trop opaque permet certes de cacher la source de lumière lorsque celle-ci est éteinte mais pas d'obtenir une luminosité satisfaisante lors de l'éclairage. En outre, les matériaux semi-opaques sont eux aussi parfois considérés comme inesthétiques et n'offrent pas des rendus lumineux satisfaisants.

Un autre inconvénient de ce type de dispositif d'éclairage et/ou de signalisation est que la source de lumière constitue un point chaud. La lumière qui en résulte est généralement jugée non esthétique, agressive et peu agréable par une personne l'observant.

Le document EP 3 190 006 A1 divulgue une grille pour calandre de véhicule automobile comprenant des éclairages à LED permettant à la grille de s'illuminer et un guide lumière formant un profilé à section transversale ouverte et comportant un premier élément définissant sur sensiblement toute la longueur du profilé une zone transparente à la lumière émise par la source de lumière, un second élément définissant sur sensiblement toute la longueur du profilé une zone opaque à la lumière émise par la source de lumière, la source de lumière émettant de la lumière depuis l'intérieur du profilé vers les zones transparente et opaque.

Le document US 2015/138807 A1 divulgue une grille pour calandre de véhicule automobile comprenant une pluralité de sources de lumière. Les documents JP 2012 037963 A (lampe), WO 03/066374 A2 (feu stop) et WO 2017/059431 A1 (éléments lumineux) divulguent des structures pour véhicule automobile comprenant une ou plusieurs sources de lumière.

L'invention a pour but de fournir un élément lumineux alternatif aux solutions antérieures, et permettant d'obtenir un éclairage homogène sur toute la longueur de l'élément lumineux.

A cet effet, l'invention a pour objet un élément lumineux pour pièce de carrosserie de véhicule automobile, comportant au moins une source de lumière et un guide de lumière, caractérisé en ce que le guide de lumière constitue un profilé à section transversale ouverte. L'élément lumineux comporte :
- un premier élément en polycarbonate transparent injecté, définissant sur sensiblement toute la longueur du profilé une zone transparente à la lumière émise par la source de lumière ;
- au moins un second élément en polycarbonate noir injecté, définissant sur sensiblement toute la longueur du profilé une zone opaque à la lumière émise par la source de lumière ;
la source de lumière émettant de la lumière depuis l'intérieur du profilé vers les zones transparente et opaque, la source de lumière étant intégrée dans le premier élément (40), à une extrémité du profilé.

L'élément lumineux selon l'invention peut en outre comprendre au moins une des caractéristiques suivantes :
- l'ouverture du profilé est destinée à être tournée vers la pièce de carrosserie, et le profilé comporte une face intérieure destinée à être tournée vers la pièce de carrosserie, et une face extérieure opposée à la face intérieure ;
- la source de lumière émet de la lumière directement dans le premier élément ;
- le premier élément comporte sur la face intérieure des stries aptes à réfléchir la lumière émise par la source de lumière le long du premier élément ;
- les stries sont disposées à intervalles réguliers pour diffuser localement la lumière, et sont de plus en rapprochées les unes des autres en s'écartant de la source de lumière ;
- le premier élément constitue un profilé à section transversale ouverte ;
- le premier élément comporte une surépaisseur au niveau de l'axe médian du profilé de l'élément ;
- l'élément lumineux comporte deux seconds éléments de part et d'autre de la surépaisseur, recouvrant les faces intérieures du profilé du premier élément ;
- chaque second élément comporte un moyen de fixation à la pièce de carrosserie.
- chaque élément de fixation constitue un clip ;
- les seconds éléments forment des parois latérales du profilé du guide de lumière.
- l'élément lumineux comporte un film décoratif thermoformé apte à laisser passer la lumière et recouvrant au moins une partie de la face extérieure ;
- le film décoratif thermoformé a une épaisseur préférentiellement comprise en 5 et 20 micromètres ;
- le film décoratif thermoformé est recouvert d'un vernis ;
- l'élément lumineux constitue un contour de grille de calandre.

### Brève description des figures

L'invention sera mieux comprise à la lecture de la description qui va suivre donnée uniquement à titre d'exemple et faite en se référant aux dessins annexés dans lesquels :
[Fig. 1] est une vue en perspective d'un guide de lumière d'un élément lumineux selon un mode de réalisation ;
[Fig. 2] illustre une section transversale du guide de lumière de la figure 1 ;
[Fig. 3] illustre une section transversale d'un élément lumineux selon une variante du mode de réalisation des figures 1 et 2, dans lequel les seconds éléments comportent des moyens de fixation à la pièce de carrosserie, tels que des clips ;
[Fig. 4] illustre un détail de la succession de couche formant la paroi du guide de lumière de l'élément lumineux des figures 1, 2 et 3 ;
[Fig. 5] est une vue en perspective d'un élément lumineux selon un premier mode de réalisation de l'invention ;
[Fig. 6] est une partie d'une coupe médiane de l'élément lumineux de la figure 5 ;
[Fig. 7] est une vue en perspective d'un élément lumineux selon un deuxième mode de réalisation de l'invention ;
[Fig. 8] illustre une section transversale d'un élément lumineux selon un dispositif non couvert par l'invention.

### Description détaillée

L'invention concerne un élément lumineux 10, pour une pièce de carrosserie 100, comportant au moins une source de lumière 20 et un guide de lumière 30.

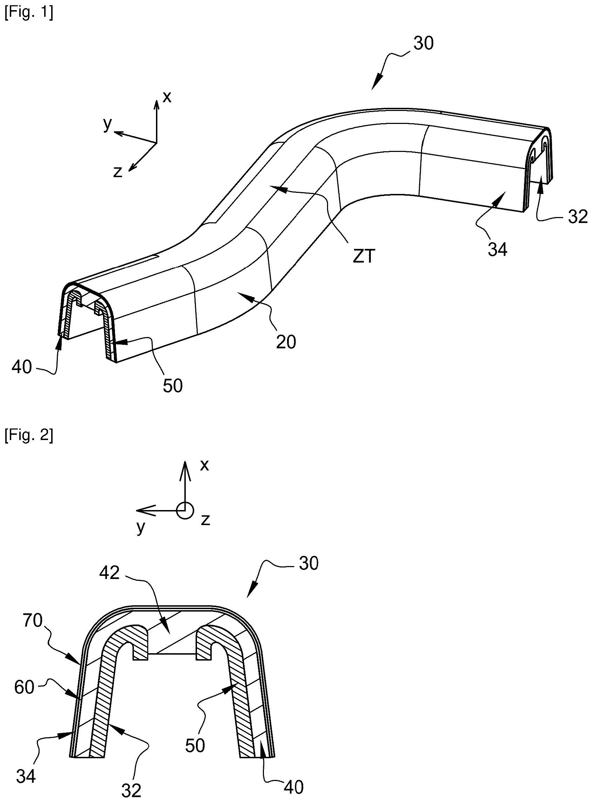

On se réfère maintenant à la figure 1 qui illustre un exemple de guide de lumière 30 d'un élément lumineux 10.

Le guide de lumière 30 constitue un profilé à section transversale ouverte. Selon l'exemple de la figure 1, le profilé forme une gouttière.

L'ouverture de la gouttière est destinée à être tournée vers la pièce de carrosserie 100, et le profilé comporte une face intérieure 32 destinée à être tournée vers la pièce de carrosserie 100, et une face extérieure 34 opposée à la face intérieure.

On se réfère maintenant à la figure 2 qui illustre une section transversale du guide de lumière 30 de la figure 1.

Le guide de lumière 30 comporte un premier élément 40 en polycarbonate transparent injecté. Selon ce premier mode de réalisation, le premier élément 40 constitue un profilé à section transversale ouverte. Comme l'illustre la figure 1, le premier élément 40 définit sur sensiblement toute la longueur du profilé une zone ZT transparente à la lumière émise par la source de lumière 20.

Le guide de lumière 30 comporte au moins un second élément 50 en polycarbonate noir injecté. Selon l'exemple des figures 1 et 2, le guide de lumière comporte deux seconds éléments, positionnés sur les parois latérales de la gouttière formée par le premier élément 40. Ainsi, les seconds éléments sont à l'intérieur du profilé, sur le premier élément 40, et ne constituent donc pas la face extérieure du guide de lumière 30. Comme l'illustre la figure 1, chaque second élément 40 définit sur sensiblement toute la longueur du profilé une zone ZO opaque à la lumière émise par la source de lumière 20.

Selon une variante de réalisation, le premier élément 40 présente une surépaisseur 42 au niveau de la zone ZT. Selon l'exemple des figures 1 et 2, la surépaisseur est localisée au niveau de l'axe médian du profilé du premier élément 40. L'élément lumineux 10 comporte deux seconds éléments 50 de part et d'autre de la surépaisseur 42. Les seconds éléments 40 recouvrent les faces intérieures du profilé du premier élément 40.

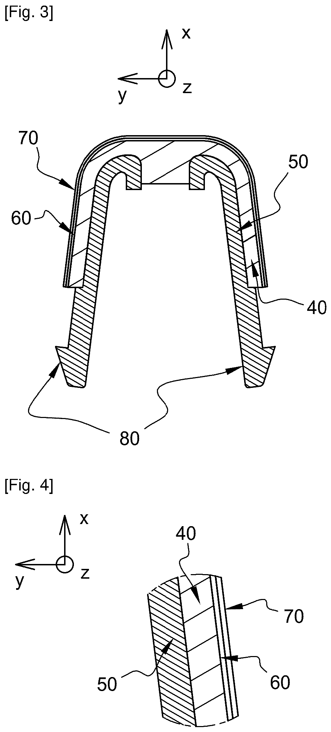

Selon une variante de réalisation, les seconds éléments 50 portent des moyens de fixation 80 à la pièce de carrosserie 100. Selon l'exemple de la figure 3, ces moyens de fixation sont des clips positionnés à une extrémité de chaque second élément 50, et se prolongeant en dehors de la gouttière, au-delà des faces intérieures du premier élément 40. Ainsi, la fixation de l'élément lumineux 10 à la pièce de carrosserie 100 n'est pas visible de l'extérieur, car seul le premier élément 40 est affleurant à la pièce de carrosserie et visible de l'extérieur.

Selon une variante de réalisation, l'élément lumineux 10 comporte un film décoratif 60 thermoformé apte à laisser passer la lumière et recouvrant au moins une partie de la face extérieure 34. Le film décoratif 60 thermoformé a une épaisseur préférentiellement comprise en 5 et 20 micromètres. Il est avantageusement recouvert d'un vernis 70. Le film décoratif peut par exemple être un film de couleur chromée.

Les figures 1 à 4, illustrent une variante de réalisation selon laquelle le film décoratif 60 thermoformé recouvre une partie (les parois latérales de la gouttière) du premier élément 40. Ils ne sont donc pas en contact avec les second éléments 50. En particulier la figure 4, illustre un détail de la succession de couche formant une paroi latérale du guide de lumière de l'élément lumineux des figures 1, 2 et 3.

La source de lumière 20 émet de la lumière depuis l'intérieur de la gouttière vers les zones transparente ZT et opaque ZO. En effet, la source de lumière est positionnée dans la gouttière, et la lumière rayonne donc sur le fond de la gouttière et sur les parois internes de celle-ci (parois latérales, et fond de la gouttière).

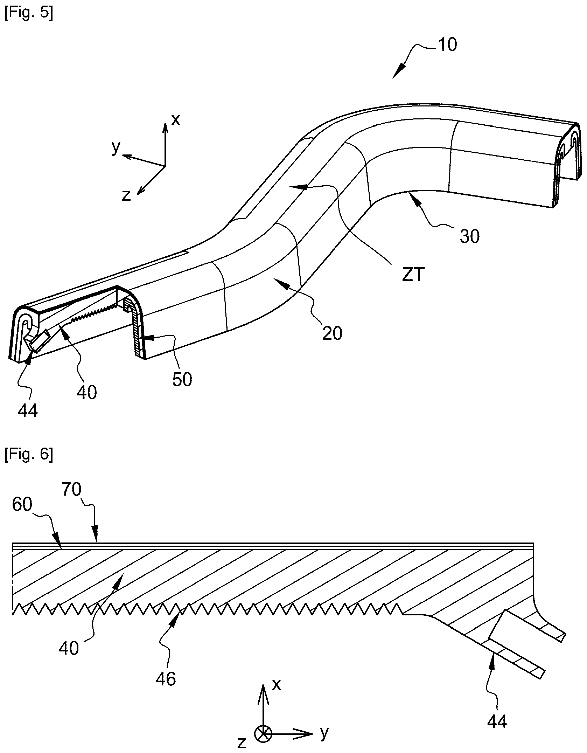

On se réfère maintenant à la figure 5 qui illustre un élément lumineux 10 selon un premier mode de réalisation de l'invention.

Selon ce mode de réalisation, le premier élément 40 présente une surépaisseur 42 au niveau de la zone ZT. Selon l'exemple des figures 1 et 2, la surépaisseur est localisée au niveau de l'axe médian du profilé du premier élément 40. L'élément lumineux 10 comporte deux seconds éléments 50 de part et d'autre de la surépaisseur 42. Les seconds éléments 40 recouvrent les faces intérieures du profilé du premier élément 40.

Comme illustré sur les figures 5 et 6, à une extrémité du guide de lumière, la surépaisseur 42 comporte un logement 44 portant la source de lumière 20. Le logement 44 possède une orientation permettant d'émettre la lumière dans l'épaisseur du premier élément 40, au niveau de la zone ZT. Ainsi, la source de lumière 20 est intégrée dans le premier élément 40, à une extrémité du profilé, elle émet de la lumière directement dans le premier élément 40.

Afin que cette lumière soit diffusée de façon homogène dans toute la zone ZT, la face intérieure 32, formant le fond de la gouttière et formée par le premier élément 40, comporte des stries 46 aptes à réfléchir la lumière émise par la source de lumière 20 le long du premier élément 40, dans la zone ZT.

Les stries 46 sont disposées à intervalles réguliers pour diffuser localement la lumière, et sont de plus en rapprochées les unes des autres en s'écartant de la source de lumière 20.

La figure 6 illustre en détail la présence du logement 44 et des stries 46 de diffusion de la lumière.

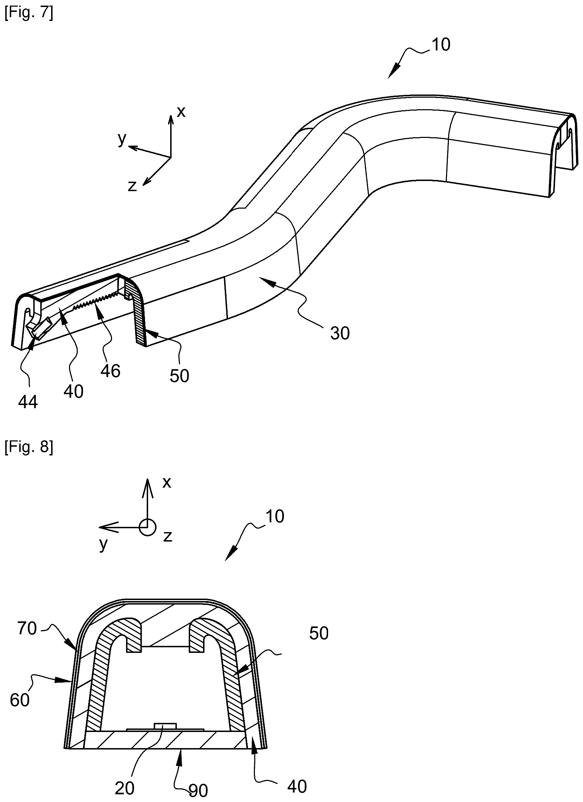

On se réfère maintenant à la figure 7 qui illustre un élément lumineux 10 selon un second mode de réalisation de l'invention.

Ce second mode de réalisation, se distingue du premier en ce que les seconds éléments 50 forment les parois latérales de la gouttière. Ainsi, le premier élément 40 ne constitue plus un profilé à section transversale ouverte. Le premier élément 40 est réduit à la zone transparente ZT. Les seconds éléments 50 sont ainsi positionnés de part et d'autre du premier élément 40.

On se réfère maintenant à la figure 8 qui illustre un élément lumineux 10 selon un dispositif non couvert par l'invention, dans lequel la source de lumière 20 comporte un ensemble de diodes électroluminescentes positionné sur un support 90 fermant le profilé, les diodes étant aptes à diffuser de la lumière à travers la zone transparente ZT. La lumière ainsi émise par les diodes est bloquée par les seconds éléments 50, au niveau des zones opaques 50 formant les parois latérales du profilé.

De tels éléments lumineux peuvent constituer des pièces esthétiques, disposées par exemple en face avant, ou sur les portières d'un véhicule afin de réaliser une signature lumineuse. Par exemple, l'élément lumineux 10 peut constituer un contour de grille de calandre.

### Liste des références

- 10 :: élément lumineux pour pièce de carrosserie 100
- 20 :: source de lumière de l'élément lumineux 10
- 30 :: guide de lumière de l'élément lumineux 10
- 32 :: face intérieure du profilé du guide de lumière 30
- 34 :: face extérieure du profilé du guide de lumière 30
- 40 :: premier élément du guide de lumière 30, en polycarbonate transparent injecté
- 42 :: surépaisseur du premier élément 40 au niveau de l'axe médian du profilé de l'élément 10
- 44 :: logement intégré dans le premier élément 40 portant la source de lumière 20
- 46 :: stries de la face intérieur du premier élément 40, au niveau de la zone transparente ZT
- ZT :: zone du guide de lumière 30 transparente à la lumière émise par la source de lumière 20
- 50 :: second élément du guide de lumière 30, en polycarbonate noir injecté
- ZO :: zone du guide de lumière 30 opaque à la lumière émise par la source de lumière 20
- 60 :: film décoratif thermoformé
- 70 :: vernis
- 80 :: élément de fixation de l'élément lumineux 10 à la pièce de carrosserie 100
- 90 :: support à diodes électroluminescentes
- 100 :: véhicule automobile

## Revendications

1. Elément lumineux (10) pour pièce de carrosserie de véhicule automobile (100), comportant au moins une source de lumière (20) et un guide de lumière (30), le guide de lumière (30) constituant un profilé à section transversale ouverte, et comportant :
- un premier élément (40) en polycarbonate transparent injecté, définissant sur sensiblement toute la longueur du profilé une zone transparente (ZT) à la lumière émise par la source de lumière (20) ;
- au moins un second élément (50) en polycarbonate noir injecté, définissant sur sensiblement toute la longueur du profilé une zone opaque (ZO) à la lumière émise par la source de lumière (20) ;
la source de lumière (20) émettant de la lumière depuis l'intérieur du profilé vers les zones transparente (ZT) et opaque (ZO),
**caractérisé en ce que** la source de lumière (20) est intégrée dans le premier élément (40), à une extrémité du profilé.

2. Elément lumineux (10) selon la revendication 1, dans lequel l'ouverture du profilé est destinée à être tournée vers la pièce de carrosserie (100), et le profilé comporte une face intérieure (32) destinée à être tournée vers la pièce de carrosserie (100), et une face extérieure (34) opposée à la face intérieure.

3. Elément lumineux (10) selon l'une des revendications précédentes, dans lequel la source de lumière (20) émet de la lumière directement dans le premier élément (40).

4. Elément lumineux (10) selon l'une des revendications précédentes, dans lequel le premier élément (40) comporte sur la face intérieure (32) des stries (46) aptes à réfléchir la lumière émise par la source de lumière (20) le long du premier élément (40).

5. Elément lumineux (10) selon la revendication précédente, dans lequel les stries (46) sont disposées à intervalles réguliers pour diffuser localement la lumière, et sont de plus en rapprochées les unes des autres en s'écartant de la source de lumière (20).

6. Elément lumineux (10) selon l'une des revendications précédentes, dans lequel le premier élément (40) constitue un profilé à section transversale ouverte.

7. Elément lumineux (10) selon la revendication précédente, dans lequel le premier élément (40) comporte une surépaisseur (42) au niveau de l'axe médian du profilé de l'élément (10).

8. Elément lumineux (10) selon la revendication précédente, comportant deux seconds éléments (50) de part et d'autre de la surépaisseur (42), recouvrant les faces intérieures du profilé du premier élément (40).

9. Elément lumineux (10) selon la revendication précédente, dans lequel chaque second élément (50) comporte un moyen de fixation (80) à la pièce de carrosserie (100).

10. Elément lumineux (10) selon la revendication précédente, dans lequel chaque élément de fixation (80) constitue un clip.

11. Elément lumineux (10) selon l'une des revendications précédentes, dans lequel les seconds éléments 50 forment des parois latérales du profilé du guide de lumière (30).

12. Elément lumineux (10) selon l'une des revendications précédentes, comportant un film décoratif (60) thermoformé apte à laisser passer la lumière et recouvrant au moins une partie de la face extérieure (34).

13. Elément lumineux (10) selon la revendication précédente, dans lequel le film décoratif (60) thermoformé a une épaisseur préférentiellement comprise en 5 et 20 micromètres.

14. Elément lumineux (10) selon l'une des revendications 12 et 13, dans lequel le film décoratif (60) thermoformé est recouvert d'un vernis (70).

15. Elément lumineux (10) selon l'une des revendications précédentes, constituant un contour de grille de calandre.

## Patentansprüche

1. Leuchtelement (10) für ein Karosserieteil (100) eines Kraftfahrzeugs, aufweisend mindestens eine Lichtquelle (20) und ein Lichtleiter (30), wobei der Lichtleiter (30) ein Profil mit offenem Querschnitt bildet, und aufweisend:
- ein erstes Element (40) aus gespritztem transparentem Polycarbonat, das im Wesentlichen über die gesamte Länge des Profils einen Bereich (ZT) definiert, der für das von der Lichtquelle (20) ausgesandte Licht transparent ist;
- mindestens ein zweites Element (50) aus gespritztem schwarzem Polycarbonat, das im Wesentlichen über die gesamte Länge des Profils einen Bereich (ZO) definiert, der für das von der Lichtquelle (20) ausgesendete Licht undurchsichtig ist;
wobei die Lichtquelle (20) Licht aus dem Inneren des Profils in Richtung des transparenten (ZT) und des undurchsichtigen (ZO) Bereichs emittiert,
**dadurch gekennzeichnet, dass** die Lichtquelle (20) in das erste Element (40) an einem Ende des Profils integriert ist.

2. Leuchtelement (10) nach Anspruch 1, wobei die Öffnung des Profils dazu bestimmt ist, dem Karosserieteil (100) zugewandt zu sein, und das Profil eine Innenseite (32), die dazu bestimmt ist, dem Karosserieteil (100) zugewandt zu sein, und eine Außenseite (34), die der Innenseite gegenüberliegt, aufweist.

3. Leuchtelement (10) nach einem der vorhergehenden Ansprüche, wobei die Lichtquelle (20) Licht direkt in das erste Element (40) emittiert.

4. Leuchtelement (10) nach einem der vorhergehenden Ansprüche, wobei das erste Element (40) auf der Innenseite (32) Rillen (46) aufweist, die geeignet sind, das von der Lichtquelle (20) ausgesandte Licht entlang des ersten Elements (40) zu reflektieren.

5. Leuchtelement (10) nach dem vorhergehenden Anspruch, bei dem die Rillen (46) in regelmäßigen Abständen angeordnet sind, um das Licht lokal zu streuen, und mit zunehmender Entfernung von der Lichtquelle (20) immer enger zusammenrücken.

6. Leuchtelement (10) nach einem der vorhergehenden Ansprüche, wobei das erste Element (40) ein Profil mit offenem Querschnitt bildet.

7. Leuchtelement (10) nach dem vorhergehenden Anspruch, wobei das erste Element (40) eine Verdickung (42) an der Mittelachse des Profils des Elements (10) aufweist.

8. Leuchtelement (10) nach dem vorhergehenden Anspruch, mit zwei zweiten Elementen (50) auf beiden Seiten der Verdickung (42), die die Innenseiten des Profils des ersten Elements (40) abdecken.

9. Leuchtelement (10) nach dem vorhergehenden Anspruch, wobei jedes zweite Element (50) ein Mittel (80) zur Befestigung an dem Karosserieteil (100) aufweist.

10. Leuchtelement (10) nach dem vorhergehenden Anspruch, wobei jedes Befestigungselement (80) einen Clip bildet.

11. Leuchtelement (10) nach einem der vorhergehenden Ansprüche, wobei die zweiten Elemente 50 Seitenwände des Lichtleiterprofils (30) bilden.

12. Leuchtelement (10) nach einem der vorhergehenden Ansprüche, mit einer warmgeformten Dekorfolie (60), die lichtdurchlässig ist und mindestens einen Teil der Außenseite (34) bedeckt.

13. Leuchtelement (10) nach dem vorhergehenden Anspruch, wobei die warmgeformte Dekorfolie (60) eine Dicke von vorzugsweise 5 bis 20 Mikrometern aufweist.

14. Leuchtelement (10) nach einem der Ansprüche 12 oder 13, wobei die thermogeformte Dekorfolie (60) mit einem Lack (70) beschichtet ist.

15. Leuchtelement (10) nach einem der vorhergehenden Ansprüche, das eine Umrandung eines Kühlergrills bildet.

## Claims

1. Light element (10) for a bodywork component (100) of a motor vehicle, comprising at least one light source (20) and a light guide (30), the light guide (30) forming a profile of open cross-section, and comprising:
- a first element (40) made of injection-molded transparent polycarbonate, defining, along substantially the entire length of the profile, a zone (ZT) that is transparent to the light emitted by the light source (20);
- at least one second element (50) made of injection-molded black polycarbonate, defining, along substantially the entire length of the profile, a zone (ZO) that is opaque to the light emitted by the light source (20);
the light source (20) emitting light from inside the profile toward the transparent (ZT) and opaque (ZO) zones, **characterized in that** the light source (20) is integrated into the first element (40), at one end of the profile.

2. Light element (10) according to claim 1, wherein the opening of the profile is intended to be turned toward the bodywork component (100), and the profile comprises an inner face (32) intended to be turned toward the bodywork component (100), and an outer face (34) opposite the inner face.

3. Light element (10) according to one of the preceding claims, wherein the light source (20) emits light directly into the first element (40).

4. Light element (10) according to one of the preceding claims, wherein the first element (40) comprises, on the inner face (32), ridges (46) capable of reflecting the light emitted by the light source (20) along the first element (40).

5. Light element (10) according to the preceding claim, wherein the ridges (46) are arranged at regular intervals to locally diffuse the light, and are brought closer to each other as they move away from the light source (20).

6. Light element (10) according to one of the preceding claims, in which the first element (40) constitutes a profile with an open cross-section.

7. Light element (10) according to the preceding claim, wherein the first element (40) comprises an extra thickness (42) at the median axis of the profile of the element (10).

8. Light element (10) according to the preceding claim, comprising two second elements (50) on either side of the extra thickness (42), covering the inner faces of the profile of the first element (40).

9. Light element (10) according to the preceding claim, wherein each second element (50) comprises means (80) for attachment to the bodywork component (100).

10. Light element (10) according to the preceding claim, wherein each attachment element (80) constitutes a clip.

11. Light element (10) according to one of the preceding claims, wherein the second elements (50) form side walls of the profile of the light guide (30).

12. Light element (10) according to one of the preceding claims, comprising a thermoformed decorative film (60) capable of allowing light to pass and covering at least part of the outer face (34).

13. Light element (10) according to the preceding claim, wherein the thermoformed decorative film (60) has a thickness preferably between 5 and 20 micrometers.

14. Light element (10) according to one of claims 12 and 13, wherein the thermoformed decorative film (60) is covered with a varnish (70).

15. Light element (10) according to one of the preceding claims, constituting an outline of a radiator grille.
